# FASCICULE DE BREVET EUROPEEN

(11) **EP 1 600 734 B1**
(45) Date de publication et mention de la délivrance du brevet: **12.09.2007**
(21) Numéro de dépôt: 05290754.0
(22) Date de dépôt: 06.04.2005
(51) Int. Cl.: G01C 21/20

(54) **Procédé et dispositif de guidage d'un aéronef à l'atterrissage**
Verfahren und Vorrichtung zur Führung eines Flugzeugs bei der Landung
Method and apparatus for guiding an aircraft at landing

(30) Priorité: 18.05.2004 FR 0405384
(43) Date de publication de la demande: 30.11.2005
(73) Titulaire: AIRBUS France, 31060 Toulouse (FR)
(72) Inventeur: Artini, Franck, 31000 Toulouse (FR); Strongman, Edward, 31530 Bretx (FR)
(74) Mandataire: Hauer, Bernard

(56) Documents cités:
- EP-A- 0 798 685
- US-B1- 6 289 270
- US-B1- 6 438 469
- DATABASE COMPENDEX [Online] ENGINEERING INFORMATION, INC., NEW YORK, NY, US; KRICKE K DIETER ET AL: "Low-level flight capability of a future military transport aircraft based on commercial avionics" XP002308965 Database accession no. EIX98114025910 & AIAA IEEE DIG AVIONICS SYST CONF PROC; AIAA/IEEE DIGITAL AVIONICS SYSTEMS CONFERENCE - PROCEEDINGS 1997 IEEE, PISCATAWAY, NJ, USA, vol. 2, 1997, pages 7.2-24,

## Description

La présente invention concerne un procédé et un dispositif de guidage d'un aéronef.

Plus précisément, le guidage de l'aéronef, en particulier un avion de transport militaire, est mis en oeuvre au moins sur une trajectoire intermédiaire entre une première trajectoire de vol pour un vol à basse altitude, et une deuxième trajectoire de vol qui débute à un point initial, et à partir de laquelle est réalisé un atterrissage tactique.

La présente invention s'applique donc à un atterrissage tactique, c'est-à-dire à un atterrissage qui est réalisé sur une piste d'atterrissage non préparée, par exemple dans le domaine militaire pour décharger des troupes et du matériel en vue d'une action inopinée. Pour pouvoir réaliser dans de bonnes conditions un tel atterrissage tactique, il est nécessaire que l'aéronef arrive de façon stabilisée, à la bonne vitesse (avec une accélération appropriée), à la bonne altitude et dans une configuration aérodynamique appropriée audit point initial correspondant au début de ladite (deuxième) trajectoire de vol, à la fin de laquelle sera réalisé l'atterrissage tactique.

De plus, pour pouvoir réaliser un tel atterrissage tactique le plus discrètement possible, on fait généralement voler l'aéronef le long d'une trajectoire d'approche à basse altitude, jusqu'à ladite deuxième trajectoire de vol, pour permettre à l'aéronef de bénéficier d'un masquage par le terrain et ainsi ne pas être facilement détectable.

Par ailleurs, pour essayer d'atteindre ledit point initial dans les meilleures conditions possibles, le pilote d'un tel aéronef dispose en général uniquement d'une information concernant un point de décélération qui est situé en amont dudit point initial, et à partir duquel il est conseillé de décélérer l'aéronef. Toutefois, ce point de décélération ne tient pas compte du profil du terrain à l'approche de la zone d'atterrissage, et le pilote doit donc ajuster manuellement le pilotage de l'aéronef pour atteindre ledit point initial auxdites conditions particulières précitées, ce qui est bien entendu très difficile à réaliser.

Par le document US-6 438 469, on connaît un système de contrôle de vol d'un aéronef, en vue d'un atterrissage sur une piste d'atterrissage. Ce document connu décrit notamment une manoeuvre de rotation devant être mise en oeuvre par l'aéronef, pour pouvoir atterrir sur la piste d'atterrissage. Cette manoeuvre de rotation est réalisée le long d'une trajectoire intermédiaire qui est définie entre une trajectoire d'approche et un segment final qui est aligné avec' l'axe de la piste d'atterrissage. Cette trajectoire intermédiaire débute à un point de transition particulier, où l'aéronef doit quitter la trajectoire d'approche pour pouvoir réaliser la manoeuvre de rotation.

La présente invention concerne un procédé de guidage d'un aéronef au moins sur une trajectoire intermédiaire entre une première trajectoire de vol pour un vol à basse altitude et une deuxième trajectoire de vol qui débute à un point initial, et à partir de laquelle est réalisé un atterrissage tactique, procédé de guidage qui permet de remédier aux inconvénients précités.

A cet effet, selon l'invention, ledit procédé de guidage selon lequel:
a) on détermine un point de transition qui se trouve sur ladite première trajectoire de vol, qui représente le début de ladite trajectoire intermédiaire, et qui correspond au point où l'aéronef doit quitter ladite première trajectoire de vol pour atteindre ledit point initial dans des conditions de vol prédéterminées ; et
b) on utilise ledit point de transition pour guider l'aéronef entre lesdites première et deuxième trajectoires de vol,
est remarquable en ce que ladite première trajectoire de vol est une trajectoire pour un vol à basse altitude, et en ce que, à l'étape a), pour déterminer ledit point de transition:
- on détermine, dans le plan vertical, les différents points de croisement entre, d'une part, ladite première trajectoire de vol et, d'autre part, des première et seconde droites qui sont définies dans le plan vertical à partir dudit point initial, en amont, ladite première droite présentant une première pente qui est positive et ladite seconde droite présentant une seconde pente qui est négative ; et
- on sélectionne, comme point de transition, l'un desdits points de croisement, à savoir celui qui est situé le plus près dudit point initial.

Ainsi, grâce à l'invention, on connaît le point (point de transition) où l'aéronef doit quitter ladite première trajectoire de vol pour pouvoir atteindre ledit point initial, dans des conditions de vol prédéterminées, permettant de réaliser un atterrissage tactique dans les meilleures dispositions possibles.

De préférence, lesdites conditions de vol prédéterminées concernent au moins certaines des conditions suivantes :
- une vitesse prédéterminée ;
- une altitude prédéterminée ;
- une configuration aérodynamique prédéterminée de l'aéronef ;
- un taux de décélération ;
- un horaire de parachutage à respecter ; et
- une pente sol maximale de rejointe de l'altitude de parachutage.

La présente invention est appropriée aussi bien à un guidage manuel, qu'à un guidage automatique en trajectoire et en vitesse (temps). Ainsi, avantageusement :
- dans une première variante relative notamment à un guidage manuel, à l'étape b), on présente ledit point de transition à un pilote de l'aéronef ; et
- dans une seconde variante, lorsque l'aéronef est guidé automatiquement, le guidage automatique pour suivre ladite trajectoire intermédiaire est déclenché audit point de transition.

En outre, avantageusement, ladite trajectoire intermédiaire correspond à un segment de droite reliant ledit point de transition audit point initial.

Par ailleurs, pour apporter une aide supplémentaire permettant notamment d'amener l'aéronef de la manière la plus stabilisée possible audit point initial, de façon avantageuse :
- à l'étape a), on détermine, de plus :
   ■ au moins un premier point auxiliaire correspondant à un point de changement de vitesse où l'aéronef doit décélérer ; et/ou
   ■ au moins un second point auxiliaire correspondant à un point de changement de configuration aérodynamique de l'aéronef. On prévoit généralement plusieurs seconds points auxiliaires qui sont relatifs respectivement aux différentes configurations aérodynamiques successives à commander avant d'arriver à la configuration aérodynamique adéquate ; et
- à l'étape b), on utilise ledit premier point auxiliaire et/ou ledit second point auxiliaire pour piloter l'aéronef.

Dans un mode de réalisation particulier, ladite deuxième trajectoire de vol, à partir de laquelle est réalisé l'atterrissage tactique, est insérée dans une section de vol à basse altitude comprenant :
- ladite première trajectoire de vol, pour un vol à basse altitude, en amont de ladite deuxième trajectoire de vol ; et
- une troisième trajectoire de vol, également pour un vol à basse altitude, en aval de ladite deuxième trajectoire de vol.

Ainsi, grâce à ce mode de réalisation particulier, l'aéronef peut continuer à voler à basse altitude (ou revenir à un vol à basse altitude) et à bénéficier du masquage par le terrain, en particulier lorsque l'atterrissage tactique n'a pas pu être réalisé.

La présente invention concerne également un dispositif de guidage d'un aéronef au moins sur une trajectoire intermédiaire entre une première trajectoire de vol pour un vol à basse altitude et une deuxième trajectoire de vol qui débute à un point initial, et à partir de laquelle est réalisé un atterrissage tactique.

Selon l'invention, ledit dispositif de guidage du type comportant :
- des premiers moyens pour déterminer un point de transition qui se trouve sur ladite première trajectoire de vol, qui représente le début de ladite trajectoire intermédiaire, et qui correspond au point où l'aéronef doit quitter ladite première trajectoire de vol pour atteindre ledit point initial dans des conditions de vol prédéterminées ; et
- des seconds moyens qui utilisent ledit point de transition pour aider au guidage de l'aéronef entre lesdites première et deuxième trajectoires de vol,
est remarquable en ce que lesdits premiers moyens qui déterminent un point de transition qui se trouve sur une première trajectoire de vol qui est une trajectoire pour un vol à basse altitude, comportent :
- un élément pour déterminer, dans le plan vertical, les différents points de croisement entre, d'une part, ladite première trajectoire de vol et, d'autre part, des première et seconde droites qui sont définies dans le plan vertical à partir dudit point initial, en amont, ladite première droite présentant une première pente qui est positive et ladite seconde droite présentant une seconde pente qui est négative ; et
- un élément pour sélectionner, comme point de transition, l'un desdits points de croisement, à savoir celui qui est situé le plus près dudit point initial.

En outre, dans un mode de réalisation particulier, lesdits seconds moyens comportent :
- des moyens d'affichage pour présenter ledit point de transition sur un écran de visualisation, de type tête haute ou de type tête basse, en coupe horizontale et/ou verticale ; et/ou
- un système de guidage automatique (déclenchable par un pilote) pour guider automatiquement ledit aéronef au moins le long de ladite trajectoire intermédiaire.

Le dispositif conforme à l'invention apporte donc une aide précieuse permettant à un aéronef volant à basse altitude d'atteindre le début d'une phase d'atterrissage tactique dans les meilleures conditions possibles, aussi bien en guidage manuel qu'en guidage automatique.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

Les figures 2 et 3 sont deux graphiques, respectivement dans le plan latéral et dans le plan vertical, permettant de bien expliquer les caractéristiques essentielles de la présente invention.

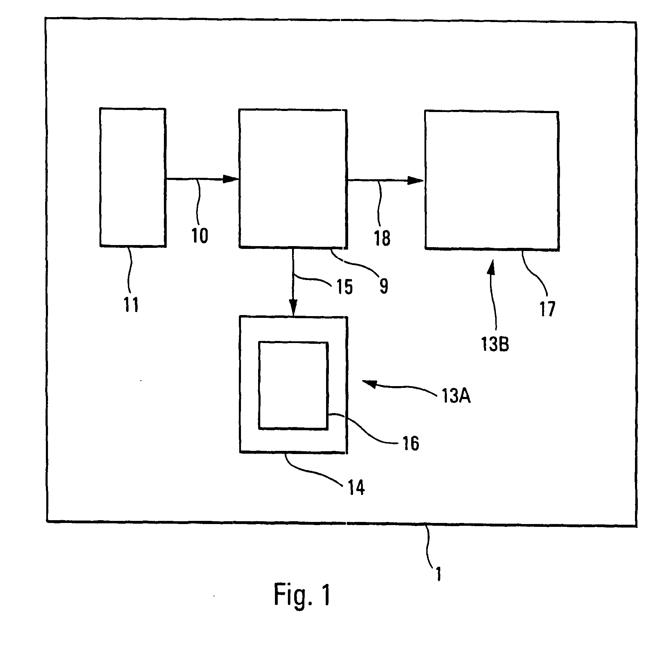

Le dispositif de guidage considéré ici est un dispositif de guidage usuel d'un aéronef A, en particulier d'un avion de transport militaire, qui permet la mise en oeuvre, de façon usuelle, d'un guidage manuel par un pilote de l'aéronef A et/ou d'un guidage automatique, par exemple par l'intermédiaire d'un système de pilotage automatique. Les caractéristiques essentielles d'un tel dispositif de guidage sont connues et n'entrent pas directement en compte dans le cadre de la présente invention. Aussi, pour des raisons de simplification du dessin, uniquement les caractéristiques utilisées pour la mise en oeuvre de la présente invention ont été représentées sur la figure 1.

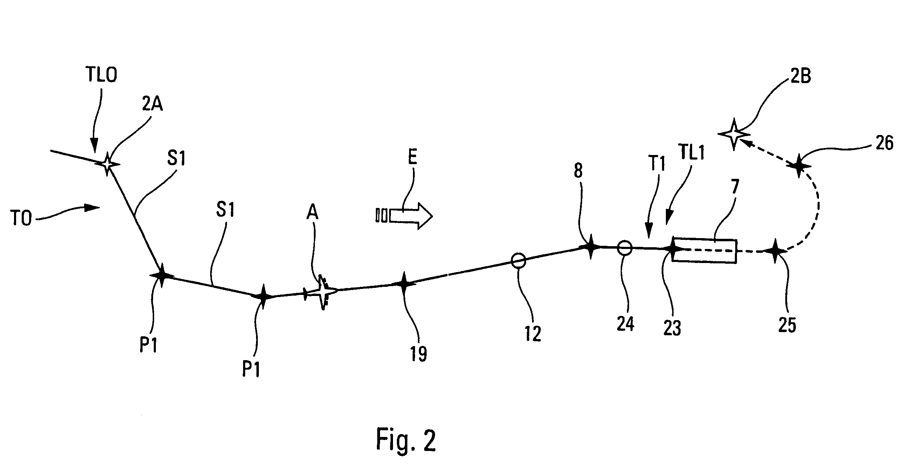

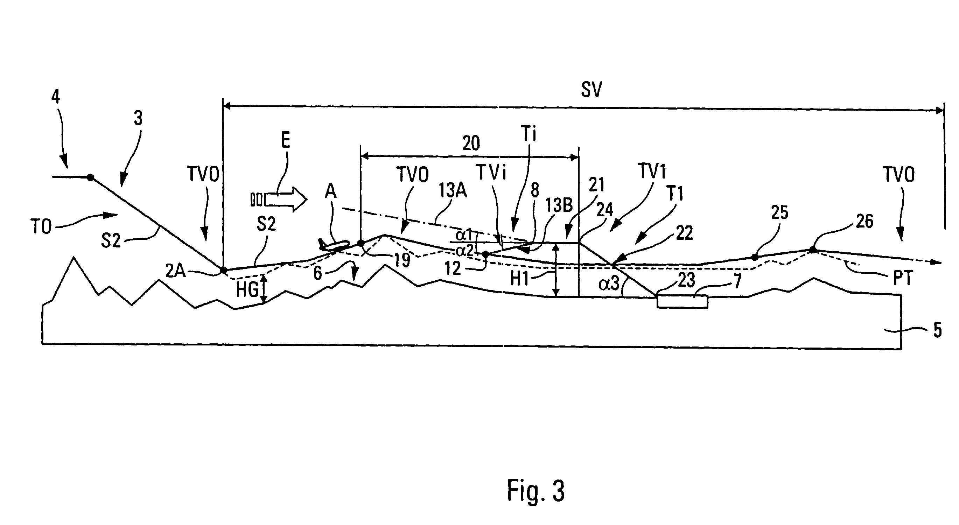

Ledit dispositif de guidage 1 permet de guider l'aéronef A le long d'une trajectoire de vol TO comprenant une trajectoire latérale TL0 définie dans un plan latéral et représentée partiellement sur la figure 2 et une trajectoire verticale TV0 (ou profil de vol) définie dans un plan vertical et représentée partiellement sur la figure 3. Comme on peut le voir sur cette figure 3, cette trajectoire de vol TO comporte une section SV de vol à basse altitude qui commence à un point 2A, par exemple suite à une descente 3 à partir d'une phase de croisière 4 à altitude stabilisée, et se termine à un point 2B. Au niveau de cette section SV de vol à basse altitude, la trajectoire de vol TO (à basse altitude) doit permettre à l'aéronef A de suivre au plus près le terrain survolé 5. Pour ce faire, la trajectoire verticale TV0 est calculée, sur cette section SV de vol à basse altitude, à partir d'un profil de terrain PT qui est situé (à une hauteur de garde prédéterminée HG) au-dessus du relief 6 du terrain 5 survolé, comme représenté sur la figure 3.

Dans un mode de réalisation préféré, ladite trajectoire de vol TO est une trajectoire dite à la ficelle qui est constituée de segments rectilignes (des segments rectilignes S1 dans le plan latéral, séparés par des points de route P1 comme représenté sur la figure 2, et des segments rectilignes S2 dans le plan vertical comme représenté sur la figure 3), dont les transitions latérale et verticale sont des arcs de cercle à rayon constant qui sont issus de considérations de vitesse de consigne et de facteurs de charge maximaux admissibles. Bien entendu, la trajectoire de vol peut également être continûment courbe dans le plan vertical et/ou dans le plan latéral. Cette trajectoire de vol TO peut être une trajectoire anticipée, déterminée à l'aide de performances de montée et de descente prédites. De plus, elle est calculée à l'aide d'une base de données numérique du terrain et épouse, au mieux et au plus près, la configuration du relief 6 du terrain 5 survolé.

La présente invention concerne le cas, où lors d'un vol sur une telle section SV de vol à basse altitude, un atterrissage tactique doit être mis en oeuvre. Un tel atterrissage tactique consiste à faire atterrir l'aéronef A sur une zone d'atterrissage 7 déterminée au sol et non préparée. Pour pouvoir réaliser dans de bonnes conditions un tel atterrissage tactique, il est nécessaire que l'aéronef A arrive de façon stabilisée, à une vitesse appropriée et dans une configuration aérodynamique appropriée, à un point initial 8 correspondant au début d'un tronçon de trajectoire de vol T1 (avec une trajectoire latérale TL1 et une trajectoire verticale TV1 qui est située à une hauteur H1 au-dessus du sol), à partir de laquelle est réalisé l'atterrissage tactique. Il doit également respecter des consignes de pente, d'accélération, de temps, ...

Selon l'invention, pour permettre à l'aéronef A d'arriver dans les conditions précitées audit point initial 8, le dispositif de guidage 1 conforme à l'invention comporte :
- des moyens 9 qui sont reliés par une liaison 10 à un ensemble 11 de sources d'informations et qui permettent de déterminer un point de transition 12 :
   ■ qui se trouve sur ladite trajectoire de vol TO à basse altitude ;
   ■ qui représente le début d'une trajectoire intermédiaire Ti, dont la trajectoire verticale TVi est représentée sur la figure 3, ladite trajectoire intermédiaire Ti permettant de relier lesdites trajectoires TO et T1 ; et
   ■ qui correspond au point où l'aéronef A doit quitter ladite trajectoire de vol TO à basse altitude pour atteindre ledit point initial 8 (de la trajectoire de vol T1 de la phase d'atterrissage tactique) dans des conditions de vol prédéterminées. Dans un mode de réalisation préféré, lesdites conditions de vol prédéterminées concernent au moins :
      * une vitesse prédéterminée ;
      * une altitude prédéterminée ;
      * une configuration aérodynamique prédéterminée de l'aéronef A ;
      * un taux de décélération ;
      * un horaire de parachutage à respecter ; et
      * une pente sol maximale de rejointe de l'altitude de parachutage ; et
- des moyens 13A, 13B qui utilisent ledit point de transition 12 pour aider au guidage de l'aéronef A entre lesdites trajectoires de vol TO et T1.

Ainsi, grâce audit dispositif 1, on connaît le point (point de transition 12) où l'aéronef A doit quitter ladite trajectoire de vol TO à basse altitude, pour pouvoir atteindre ledit point initial 8 dans des conditions de vol appropriées, permettant de réaliser, à partir de la trajectoire de vol T1, un atterrissage tactique dans les meilleures dispositions possibles, comme précisé ci-après.

On notera que grâce à une approche à basse altitude de la zone d'atterrissage 7, l'aéronef A peut bénéficier d'un masquage efficace par le terrain 5 survolé.

Dans le cadre de la présente invention, on entend par "configuration aérodynamique" particulière, une combinaison particulière des positions d'éléments mobiles (volets hypersustentateurs, train d'atterrissage, ...), dont dépendent les caractéristiques aérodynamiques de l'aéronef A.

Dans un mode de réalisation particulier :
- lesdits moyens 13A comprennent des moyens d'affichage 14 qui sont reliés par une liaison 15 aux moyens 9 et qui permettent de présenter sur un écran de visualisation 16 notamment ledit point de transition 12, ainsi que d'autres informations précisées ci-dessous. Ledit écran de visualisation 16 peut être un écran tête haute ou un écran tête basse. Il peut également s'agir d'un affichage horizontal ou d'un affichage vertical ; et
- lesdits moyens 13B comportent un système de guidage automatique usuel 17 qui est relié par une liaison 18 auxdits moyens 9. Ce système de guidage automatique usuel 17 comporte des moyens pour déterminer des ordres de pilotage et des moyens d'actionnement d'organes commandés (gouvernes, ...), auxquels sont appliqués ces ordres de pilotage.

La présente invention s'applique aussi bien à un vol en conditions VMC ("Visual Meteorological Conditions" en anglais), c'est-à-dire des conditions météolorogiques de vol à vue qui sont exprimées en fonction de la visibilité, de la distance par rapport aux nuages et du plafond, conditions égales ou supérieures à des minima spécifiés, qu'à un vol en conditions IMC ("Instrument Meteorological Conditions" en anglais), c'est-à-dire des conditions météorologiques de vol aux instruments qui sont exprimées en fonction de la visibilité, de la distance par rapport aux nuages et du plafond, à savoir des conditions inférieures aux minima spécifiés pour les conditions météorologiques de vol à vue.

Ledit ensemble 11 de sources d'informations fournit en particulier :
- la trajectoire TO de vol à basse altitude, telle que prédite ;
- la procédure d' atterrissage tactique planifiée, avec la trajectoire de vol T1. Une procédure d'atterrissage tactique représente une section du plan de vol qui définit un atterrissage tactique dans la mission planifiée, c'est-à-dire un atterrissage intermédiaire sur une piste d'atterrissage 7 non préparée ;
- une consigne de vitesse courante de l'aéronef A ; et
- le vecteur vitesse (position, vitesse, configuration aérodynamique) de l'aéronef A.

Ledit ensemble 11 de sources d'informations fournit également le temps, la pente, l'accélération, ..., choisis par l'opérateur.

Ainsi, grâce au dispositif 1 conforme à l'invention, l'aéronef A peut atteindre le point 8 de la trajectoire de vol T1 de façon stabilisée, c'est-à-dire à la vitesse et à l'altitude prédéterminées et dans la configuration aérodynamique prévue, tout en respectant les consignes de temps, de pente, de décélération, ... Ceci est très important pour permettre un atterrissage tactique dans les meilleures conditions de stabilité possibles, après une approche à basse altitude qui est souvent instable, puisque l'aéronef A suit alors le plus possible le relief 6 du terrain 5 pour des raisons de masquage notamment. Le dispositif 1 conforme à l'invention permet donc d'augmenter le confort du pilotage, et de réduire la charge de travail de l'équipage dans une telle phase d'approche qui est souvent très exigeante, tout en permettant d'atteindre ledit point initial 8 dans les meilleures conditions possibles.

On notera que, lors d'un guidage automatique, si on n'active pas, audit point de transition 12, le mode de guidage correspondant, l'aéronef A continue à voler à basse altitude le long de ladite trajectoire de vol TO (à basse altitude). De même, lors d'un guidage manuel, le pilote peut décider, en particulier lorsque les conditions opérationnelles courantes ne le permettent pas, de ne pas entamer la procédure d'atterrissage tactique audit point de transition 12 et de continuer à voler à basse altitude.

Dans un mode de réalisation particulier, les moyens 9 déterminent ledit point de transition 12, en réalisant les opérations suivantes :
- ils projettent dans le plan vertical, à partir dudit point initial 8, comme représenté sur la figure 3, en amont (c'est-à-dire vers l'arrière, dans le sens contraire au sens de vol E de l'aéronef A) une première droite 13A présentant une pente α1 positive et une seconde droite 13B présentant une pente α2 négative. De préférence, les deux pentes α1 et α2 présentent la même valeur absolue, par exemple 3° ;
- ils déterminent, dans le plan vertical, les différents points de croisement entre, d'une part, lesdites droites 13A et 13B et, d'autre part, ladite trajectoire verticale TV0 ; et
- ils sélectionnent comme point de transition 12, l'un desdits points de croisement ainsi déterminés, à savoir celui qui est situé le plus près dudit point initial 8.

Dans l'exemple représenté sur la figure 3, la trajectoire verticale TVi de la trajectoire intermédiaire Ti correspond donc au segment de ladite droite 13B, qui est situé entre le point initial 8 et le point de transition 12 déterminé de la manière précisée ci-dessus.

Par ailleurs, dans un mode de réalisation particulier, lesdits moyens 9 déterminent de plus les points suivants, qui sont présentés à un pilote de l'aéronef A par les moyens d'affichage 14 :
- des points auxiliaires correspondant à des points de changement de vitesse, où l'aéronef A doit décélérer, selon un taux de décélération prédéterminé, de manière à atteindre de façon stabilisée ledit point initial 8 à la bonne vitesse. Ceci est très important pour pouvoir atterrir à la bonne vitesse. Le premier 1 9 desdits points auxiliaires peut être différent dudit point de transition 12, comme représenté sur la figure 3 ; et
- des points auxiliaires supplémentaires (non représentés) correspondant à des points de changement de configuration aérodynamique de l'aéronef A. Ces points auxiliaires supplémentaires permettent également à l'aéronef A de ne pas arriver trop rapidement audit point initial 8.

Ainsi, grâce à l'invention, l'atterrissage tactique peut être réalisé dans les meilleures conditions possibles.

Pour réaliser un tel atterrissage tactique, la trajectoire verticale TV1 comporte généralement un tronçon horizontal 21 présentant un palier situé à la hauteur H 1 au-dessus du sol 6 et un tronçon de descente 22 présentant une pente α3 constante, aboutissant à l'extrémité 23 en amont (dans le sens de vol E de l'aéronef A) de la piste d'atterrissage 7. Le tronçon de descente 22 commence à un point 24 de début de descente. Ce dernier point forme avec le point 19 une phase de préparation 20.

Sur les figures 2 et 3, on a de plus représenté :
- un point 25 de début de rattrapage de la trajectoire TO à basse altitude, après un atterrissage tactique sur la piste d'atterrissage 7 et un décollage ultérieur ; et
- un point 26 de fin de procédure d'atterrissage tactique, notamment lorsque l'atterrissage tactique n'a pas pu être réalisé.

Sur la figure 2, on a représenté en traits interrompus en aval du point 23 la trajectoire suivie par l'aéronef A, lorsque l'atterrissage tactique n'a pas pu être réalisé.

En outre, comme le point 2B de fin de la section SV de vol à basse altitude est situé en aval desdits points 25 et 26, dans le sens de vol E de l'aéronef A, ce dernier peut continuer à voler à basse altitude après un atterrissage tactique ou à la fin d'une procédure d'atterrissage tactique (sans atterrissage effectif), et ainsi continuer à bénéficier d'un masquage par le terrain 5.

## Revendications

1. Procédé de guidage d'un aéronef au moins sur une trajectoire intermédiaire (Ti) entre une première trajectoire de vol (TO) et une deuxième trajectoire de vol (T1) qui débute à un point initial (8), et à partir de laquelle est réalisé un atterrissage tactique, procédé selon lequel :
a) on détermine un point de transition (12) qui se trouve sur ladite première trajectoire de vol (TO), qui représente le début de ladite trajectoire intermédiaire (Ti), et qui correspond au point où l'aéronef (A) doit quitter ladite première trajectoire de vol (TO) pour atteindre ledit point initial dans des conditions de vol prédéterminées ; et
b) on utilise ledit point de transition (12) pour guider l'aéronef (A) entre lesdites première et deuxième trajectoires de vol (TO, T1),
**caractérisé en ce que** ladite première trajectoire de vol (TO) est une trajectoire pour un vol à basse altitude, et **en ce que**, à l'étape a), pour déterminer ledit point de transition (12) :
- on détermine, dans le plan vertical, les différents points de croisement entre, d'une part, ladite première trajectoire de vol (TO) et, d'autre part, des première et seconde droites (13A, 13B) qui sont définies dans le plan vertical à partir dudit point initial (8), en amont, ladite première droite (1 3A) présentant une première pente (α1) qui est positive et ladite seconde droite (13B) présentant une seconde pente (α2) qui est négative ; et
- on sélectionne, comme point de transition (12), l'un desdits points de croisement, à savoir celui qui est situé le plus près dudit point initial (8).

2. Procédé selon la revendication 1,
**caractérisé en ce que** lesdites conditions de vol prédéterminées concernent les conditions suivantes :
- une vitesse prédéterminée ;
- une altitude prédéterminée ;
- une configuration aérodynamique prédéterminée de l'aéronef (A) ; et
- un taux de décélération ;

3. Procédé selon l'une des revendications 1 et 2,
**caractérisé en ce qu'**à l'étape b), on présente ledit point de transition (12) à un pilote de l'aéronef (A).

4. Procédé selon l'une quelconque des revendications précédentes,
**caractérisé en ce que**, lorsque l'aéronef (A) est guidé automatiquement, le guidage automatique pour suivre ladite trajectoire intermédiaire (Ti) est déclenché audit point de transition (12).

5. Procédé selon l'une quelconque des revendications précédentes,
**caractérisé en ce que** ladite trajectoire intermédiaire (Ti) correspond à un segment de droite reliant ledit point de transition (12) audit point initial (8).

6. Procédé selon l'une quelconque des revendications précédentes,
**caractérisé en ce que** :
- à l'étape a), on détermine, de plus, au moins un premier point auxiliaire (19) correspondant à un point de changement de vitesse où l'aéronef (A) doit décélérer ; et
- à l'étape b), on utilise ledit premier point auxiliaire (19) pour piloter l'aéronef (A).

7. Procédé selon l'une quelconque des revendications précédentes,
**caractérisé en ce que** :
- à l'étape a), on détermine, de plus, au moins un second point auxiliaire correspondant à un point de changement de configuration aérodynamique de l'aéronef (A) ; et
- à l'étape b), on utilise ledit second point auxiliaire pour piloter l'aéronef (A).

8. Procédé selon l'une quelconque des revendications précédentes, **caractérisé en ce que** ladite deuxième trajectoire de vol (T1), à partir de laquelle est réalisé l'atterrissage tactique, est insérée dans une section (SV) de vol à basse altitude comprenant :
- ladite première trajectoire de vol (TO), pour un vol à basse altitude, en amont de ladite deuxième trajectoire de vol (T1) ; et
- une troisième trajectoire de vol (TO), également pour un vol à basse altitude, en aval de ladite deuxième trajectoire de vol (T1).

9. Dispositif de guidage d'un aéronef au moins sur une trajectoire intermédiaire (Ti) entre une première trajectoire de vol (TO) et une deuxième trajectoire de vol (T1) qui débute à un point initial (8), et à partir de laquelle est réalisé un atterrissage tactique, ledit dispositif comportant :
- des premiers moyens (9) pour déterminer un point de transition (12) qui se trouve sur ladite première trajectoire de vol (TO), qui représente le début de ladite trajectoire intermédiaire (Ti), et qui correspond au point où l'aéronef (A) doit quitter ladite première trajectoire de vol (TO) pour atteindre ledit point initial (8) dans des conditions de vol prédéterminées ; et
- des seconds moyens (13A, 13B) qui utilisent ledit point de transition (12) pour aider au guidage de l'aéronef (A) entre lesdites première et deuxième trajectoires de vol (TO, T1),
**caractérisé en ce que** lesdits premiers moyens (9) qui déterminent un point de transition (12) qui se trouve sur une première trajectoire de vol (TO) qui est une trajectoire pour un vol à basse altitude, comportent :
- un élément pour déterminer, dans le plan vertical, les différents points de croisement entre, d'une part, ladite première trajectoire de vol (TO) et, d'autre part, des première et seconde droites (13A, 13B) qui sont définies dans le plan vertical à partir dudit point initial (8), en amont, ladite première droite (1 3A) présentant une première pente (α1) qui est positive et ladite seconde droite (13B) présentant une seconde pente (α2) qui est négative ; et
- un élément pour sélectionner, comme point de transition (12), l'un desdits points de croisement, à savoir celui qui est situé le plus près dudit point initial (8).

10. Dispositif selon la revendication 9,
**caractérisé en ce que** lesdits seconds moyens (13A) comportent des moyens d'affichage (14) pour présenter ledit point de transition (12) sur au moins un écran de visualisation (16).

11. Dispositif selon l'une des revendications 9 et 10,
**caractérisé en ce que** lesdits seconds moyens (13B) comportent un système de guidage automatique (17) pour guider automatiquement ledit aéronef (A) au moins le long de ladite trajectoire intermédiaire (Ti).

12. Aéronef,
**caractérisé en ce qu'**il comporte un dispositif (1) tel que celui spécifié sous l'une quelconque des revendications 9 à 11.

13. Aéronef,
**caractérisé en ce qu'**il comporte un dispositif (1) susceptible de mettre en oeuvre le procédé spécifié sous l'une quelconque des revendications 1 à 8.

## Claims

1. A method of guiding an aircraft at least over an intermediate trajectory (Ti) between a first flight trajectory (TO) and a second flight trajectory (T1) which starts at an initial point (8), and from which trajectory a tactical landing is carried out, method according to which
a) a point of transition (12) which lies on said first flight trajectory (TO) is determined, which represents the start of said intermediate trajectory (Ti), and which corresponds to the point where the aircraft (A) must exit said first flight trajectory (TO) so as to reach said initial point under predetermined flight conditions; and
b) said point of transition (12) is used to guide the aircraft (A) between said first and second flight trajectories (TO, T1),
**characterized in that** said first flight trajectory (T0) is a trajectory for a low-altitude flight, and **in that**, in step a), to determine said point of transition (12),
- the various points of crossover between, on the one hand, said first and second straight lines (13A, 13B) and, on the other hand, said first flight trajectory (TO) are determined, in the vertical plane, wherein said first straight line (13A) exhibiting a first slope (α1) which is positive and said second straight line (13B) exhibiting a second slope (α2) which is negative are defined in the vertical plane, from said initial point (8), upstream; and
- one of said points of crossover, namely that which is situated closest to said initial point (8), is chosen as point of transition (12).

2. The method as claimed in claim 1,
**characterized in that** said predetermined flight conditions relate to the following conditions:
- a predetermined speed;
- a predetermined altitude;
- a predetermined aerodynamic configuration of the aircraft (A) ; and
- a rate of deceleration.

3. The method as claimed in one of claims 1 and 2,
**characterized in that** in step b) said point of transition (12) is presented to a pilot of the aircraft (A).

4. The method as claimed in any one of the preceding claims,
**characterized in that**, when the aircraft (A) is guided automatically, the automatic guidance for following said intermediate trajectory (Ti) is triggered at said point of transition (12).

5. The method as claimed in any one of the preceding claims,
**characterized in that** said intermediate trajectory (Ti) corresponds to a straight line segment connecting said point of transition (12) to said initial point (8).

6. The method as claimed in any one of the preceding claims,
**characterized in that**:
- in step a), in addition, at least one first auxiliary point (19) corresponding to a point of change of speed where the aircraft (A) must decelerate is determined; and
- in step b), said first auxiliary point (19) is used to pilot the aircraft (A).

7. The method as claimed in any one of the preceding claims,
**characterized in that**:
- in step a), in addition, at least one second auxiliary point corresponding to a point of change of aerodynamic configuration of the aircraft (A) is determined; and
- in step b) said second auxiliary point is used to pilot the aircraft (A).

8. The method as claimed in any one of the preceding claims,
**characterized in that** said second flight trajectory (T1), from which the tactical landing is carried out, is inserted into a low-altitude flight section (SV) comprising:
- said first flight trajectory (TO), for a low-altitude flight, upstream of said second flight trajectory (T1); and
- a third flight trajectory (TO), likewise for a low-altitude flight, downstream of said second flight trajectory (T1).

9. A device for guiding an aircraft at least over an intermediate trajectory (Ti) between a first flight trajectory (TO) and a second flight trajectory (T1) which starts at an initial point (8), and from which trajectory a tactical landing is carried out, said device comprising:
- first means (9) for determining a point of transition (12) which lies on said first flight trajectory (TO), which represents the start of said intermediate trajectory (Ti), and which corresponds to the point where the aircraft (A) must exit said first flight trajectory (TO) so as to reach said initial point (8) under predetermined flight conditions; and
- second means (13A, 13B) which use said point of transition (12) to aid the guidance of the aircraft (A) between said first and second flight trajectories (TO, T1),
**characterized in that** said first means (9) which determine a point of transition (12) which lies on a first flight trajectory (T0) that is a trajectory for a low-altitude flight, comprises :
- an item for determining, in the vertical plane, the various points of crossover between, on the one hand, said first and second straight lines (13A, 13B) and, on the other hand, said first flight trajectory (TO), wherein said first straight line (13A) exhibiting a first slope (α1) which is positive and said second straight line (13B) exhibiting a second slope (α2) which is negative are defined in the vertical plane, from said initial point (8), upstream; and
- an item for selecting one of said points of crossover, namely that which is situated closest to said initial point (8), as point of transition (12).

10. The device as claimed in claim 9,
**characterized in that** said second means (13A) comprise means of visualization (14) for presenting said point of transition (12) on at least one display screen (16).

11. The device as claimed in any one of claims 9 and 10,
**characterized in that** said second means (13B) comprise an automatic guidance system (17) for automatically guiding said aircraft (A) at least along said intermediate trajectory (Ti).

12. An aircraft,
**characterized** it comprises a device (1) such as that specified under any one of claims 9 to 11.

13. An aircraft,
**characterized** it comprises a device (1) able to implement the method specified under any one of claims 1 to 8.

## Patentansprüche

1. Verfahren zur Führung eines Flugzeugs, mindestens auf einer intermediären Bahn (Ti) zwischen einer ersten Flugbahn (TO) und einer zweiten Flugbahn (T1), die an einem Anfangspunkt (8) beginnt, und ab der eine taktische Landung ausgeführt wird, ein Verfahren demgemäß:
a) man einen Übergangspunkt (12) bestimmt, der sich auf der ersten Flugbahn (TO) befindet, der den Beginn der intermediären Bahn (Ti) darstellt, und der dem Punkt entspricht, an dem das Flugzeug (A) die erste Flugbahn (TO) verlassen muss, um unter vorherbestimmten Flugbedingungen den Anfangspunkt zu erreichen; und
b) man den Übergangspunkt (12) verwendet, um das Flugzeug (A) zwischen der ersten und zweiten Flugbahn (TO, T1) zu führen,
**dadurch gekennzeichnet, dass** die erste Flugbahn (TO) eine Bahn für einen Flug in geringer Höhe ist, und dass man, in Schritt a), um den Übergangspunkt (12) zu bestimmen:
- in der vertikalen Ebene die verschiedenen Kreuzungspunkte bestimmt zwischen einerseits der ersten Flugbahn (TO) und andererseits der ersten und zweiten Geraden (13A, 13B), die in der vertikalen Ebene ab dem Anfangspunkt (8), vorgelagert, definiert sind, wobei die erste Gerade (13A) eine erste Neigung (α1) aufweist, die positiv ist, und die zweite Grade (13B) eine zweite Neigung (α2) aufweist, die negativ ist; und
- als Übergangspunkt (12) einen der Kreuzungspunkte auswählt, und zwar denjenigen, der sich am nähesten zu dem Anfangspunkt (8) befindet.

2. Verfahren nach Anspruch 1,
**dadurch gekennzeichnet, dass** die vorherbestimmten Flugbedingungen die folgenden Bedingungen betreffen:
- eine vorherbestimmte Geschwindigkeit;
- eine vorherbestimmte Höhe;
- eine vorherbestimmte aerodynamische Konfiguration des Flugzeugs (A); und
- eine Verlangsamungsrate.

3. Verfahren nach einem der Ansprüche 1 und 2,
**dadurch gekennzeichnet, dass** man in Schritt b) den Übergangspunkt (12) einem Piloten des Flugzeugs (A) präsentiert.

4. Verfahren nach einem der vorhergehenden Ansprüche,
**dadurch gekennzeichnet, dass**, wenn das Flugzeug (A) automatisch geführt wird, die automatische Führung zum Folgen der intermediären Bahn (Ti) an dem Übergangspunkt (12) initiiert wird.

5. Verfahren nach einem der vorhergehenden Ansprüche,
**dadurch gekennzeichnet, dass** die intermediäre Bahn (Ti) einem Geradenabschnitt entspricht, der den Übergangspunkt (12) mit dem Anfangspunkt (8) verbindet.

6. Verfahren nach einem der vorhergehenden Ansprüche,
**dadurch gekennzeichnet, dass** man:
- in Schritt a) außerdem mindestens einen ersten Hilfspunkt (19) bestimmt, der einem Punkt der Änderung der Geschwindigkeit entspricht, an dem das Flugzeug (A) verlangsamen muss; und
- in Schritt b) den ersten Hilfspunkt (19) verwendet, um das Flugzeug (A) zu steuern.

7. Verfahren nach einem der vorhergehenden Ansprüche,
**dadurch gekennzeichnet, dass** man:
- in Schritt a) außerdem mindestens einen zweiten Hilfspunkt bestimmt, der einem Punkt der Änderung der aerodynamischen Konfiguration des Flugzeugs (A) entspricht; und
- in Schritt b) den zweiten Hilfspunkt (19) verwendet, um das Flugzeug (A) zu steuern.

8. Verfahren nach einem der vorhergehenden Ansprüche,
**dadurch gekennzeichnet, dass** die zweite Flugbahn (T1), ab der die taktische Landung ausgeführt wird, in einen Flugabschnitt (SV) in geringer Höhe eingefügt ist, umfassend:
- die erste Flugbahn (TO) für einen Flug in geringer Höhe, der zweiten Flugbahn (T1) vorgelagert; und
- eine dritte Flugbahn (TO), ebenfalls für einen Flug in geringer Höhe, der zweiten Flugbahn (T1) nachgelagert.

9. Vorrichtung zur Führung eines Flugzeugs, mindestens auf einer intermediären Bahn (Ti) zwischen einer ersten Flugbahn (TO) und einer zweiten Flugbahn (T1), die an einem Anfangspunkt (8) beginnt, und ab der eine taktische Landung ausgeführt wird, wobei die Vorrichtung Folgendes aufweist:
erste Mittel (9) zum Bestimmen eines Übergangspunktes (12), der sich auf der ersten Flugbahn (TO) befindet, der den Beginn der intermediären Bahn (Ti) darstellt, und der dem Punkt entspricht, an dem das Flugzeug (A) die erste Flugbahn (TO) verlassen muss, um unter vorherbestimmten Flugbedingungen den Anfangspunkt (8) zu erreichen; und
- zweite Mittel (13A, 13B), die den Übergangspunkt (12) verwenden, um bei der Führung des Flugzeugs (A) zwischen der ersten und zweiten Flugbahn (TO, T1) zu helfen,
**dadurch gekennzeichnet, dass** die ersten Mittel (9), die einen Ubergangspunkt (12) bestimmen, der sich auf einer ersten Flugbahn (TO) befindet, die eine Bahn für einen Flug in geringer Höhe ist, Folgendes aufweisen:
- ein Element zum Bestimmen, in der vertikalen Ebene, der verschiedenen Kreuzungspunkte zwischen einerseits der ersten Flugbahn (TO) und andererseits der ersten und zweiten Geraden (13A, 13B), die in der vertikalen Ebene ab dem Anfangspunkt (8), vorgelagert, definiert sind, wobei die erste Gerade (13A) eine erste Neigung (α1) aufweist, die positiv ist, und die zweite Gerade (13B) eine zweite Neigung (α2) aufweist, die negativ ist; und
- ein Element zum Auswählen von einem der Kreuzungspunkte als Übergangspunkt (12), und zwar denjenigen, der sich am nähesten zu dem Anfangspunkt (8) befindet.

10. Vorrichtung nach Anspruch 9,
**dadurch gekennzeichnet, dass** die zweiten Mittel (13A) Anzeigemittel (14) aufweisen, um den Übergangspunkt (12) auf mindestens einem Bildschirm (16) darzustellen.

11. Vorrichtung nach einem der Ansprüche 9 und 10,
**dadurch gekennzeichnet, dass** die zweiten Mittel (13B) ein automatisches Führungssystem (17) aufweisen, um das Flugzeug (A) automatisch mindestens entlang der intermediären Bahn (Ti) zu führen.

12. Flugzeug,
**dadurch gekennzeichnet, dass** es eine Vorrichtung (1) der Art aufweist, wie sie unter einem der Ansprüche 9 bis 11 spezifiziert wird.

13. Flugzeug,
**dadurch gekennzeichnet, dass** es eine Vorrichtung (1) aufweist, die geeignet ist, das Verfahren auszuführen, das unter einem der Ansprüche 1 bis 8 spezifiziert wird.
